# EUROPÄISCHE PATENTSCHRIFT

(11) **EP 1 338 404 B1**
(45) Veröffentlichungstag und Bekanntmachung des Hinweises auf die Patenterteilung: **20.11.2013**
(21) Anmeldenummer: 03003386.4
(22) Anmeldetag: 14.02.2003
(51) Int. Cl.: B29C 65/20, E06B 3/96

(54) **Vorrichtung und Verfahren zum Schweissen von Kunststoffprofilen**
Apparatus and method for welding plastic profiles
Dispositif et procédé pour souder des profilés en matière plastique

(30) Priorität: 15.02.2002 DE 10206662
(43) Veröffentlichungstag der Anmeldung: 27.08.2003
(73) Patentinhaber: Urban GmbH & Co. Maschinenbau KG, 87700 Memmingen (DE)
(72) Erfinder: Tesch, Wolfgang, 87751 Heimertingen (DE)
(74) Vertreter: Pfister, Stefan Helmut Ulrich

(56) Entgegenhaltungen:
- EP-A- 0 678 374
- EP-A- 0 819 514
- EP-A- 1 136 234
- DE-A1- 1 926 956

## Beschreibung

Der Erfindung betrifft eine Vorrichtung zum Schweißen von auf Gehrung geschnittenen Kunststoffprofilen, die an einer an den Gehrungsschnitten befindlichen Schweißfläche miteinander verschweißt werden, wobei die zu verbindenden Kunststoffprofile auf beweglichen Schlitten gelagert und gehalten sind und die Position der Schlitten gegebenenfalls festlegbar ist. Die Erfindung betrifft weiterhin ein Verfahren zur Herstellung von Kunststoffprofilrahmen.

Profilrahmen für Fenster und Türen bestehen in der einfachsten Form meistens aus je vier Profilstäben, die bei Verwendung von Kunststoff verschweißt werden müssen. Oft werden aber auch Pfosten oder Riegel als Unterteilung verwendet. Profilrahmen ohne Pfosten oder Riegel lassen sich ohne Probleme miteinander verschweißen. Erst ab einer gewissen Größe wäre dies auch mit Pfosten oder Riegeln möglich. Zum Verschweißen der Profilstäbe sind eine Reihe von Vorrichtungen zum Verschweißen von Kunststoffprofilen bekannt. Hierbei werden Einkopf-, Reihen-, Vier-Kopf-, Sechs-Kopf- bzw. Acht-Kopf-Maschinen unterschieden. Bei der Verwendung von Einkopf-Maschinen wird jede Eckverbindung am Profilrahmen einzeln verschweißt. Reihenmaschinen werden mit zwei oder mehr Schweißköpfen gebaut. Hierbei werden die Profilrahmen erst auf einer Seite und dann auf der anderen Seite verschweißt. Die Profilrahmen mit Pfosten können auch so gefertigt werden, daß erst die Pfostenverbindung und dann die Eckverbindungen geschweißt werden, wobei für jede Seite ein eigener Arbeitsgang notwendig ist. Bei der Verwendung von Vierbis Acht-Kopf-Maschinen werden die Profilrahmen in der Regel in einem Arbeitsgang geschweißt. Es ist jedoch auch möglich, die Pfostenverbindung auf anderen Maschinen herzustellen; dies kann beispielsweise durch Verschweißen der Pfostenverbindung auf gesonderten Maschinen erfolgen. Es ist aber auch bekannt, daß die Pfostenverbindungen beispielsweise durch Schrauben an dem Rahmen befestigt werden. Eine weitere Möglichkeit ist, die Schweißverbindung bzw. Schraubverbindung des Pfostens zwischen zwei Profilstäben zunächst herzustellen und dann in einem abschließenden Arbeitsvorgang den Rahmen beispielsweise auf einer Vier-Kopf-Schweißmaschine zu verschweißen.

Die zuvor beschriebenen Schweißmaschinen unterscheiden sich auch dadurch, daß unterschiedliche Schubverfahren beim Fügeprozeß der aufgeheizten und zu verschweißenden Profilstäbe eingesetzt werden. Dazu sind zwei Schubverfahren bekannt. Zum einen handelt es sich dabei um das sogenannte Diagonalschub-Verfahren und zum anderen um das sogenannte Parallelschub-Verfahren. Beim Diagonalschub-Verfahren wird mindestens ein Profilstab nach dem Aufheizen mit einem Winkel von 45° bezogen auf die spätere Schweißverbindung beziehungsweise Schweißfläche bewegt. Beim Parallelschubverfahren ist die Bewegungsrichtung 90° zu den Schweißflächen. Die zwei unterschiedlichen Verfahren werden durch die Bauart der Schweißmaschinen und durch die Gestaltung der Fenster oder Türen bestimmt. Grundsätzlich wird das Parallelschub-Verfahren angestrebt, weil hiermit bessere Eckfestigkeitswerte der Schweißverbindungen erzielt werden können. Dies liegt insbesondere daran, daß es beim Fügen im Gegensatz zum Diagonalschub-Verfahren zu keiner Relativbewegung in der Fügeebene kommt.

Aus der Druckschrift EP 0 678 374 A2 ist ein Verfahren und eine Vorrichtung zum Herstellen eines Rahmens, insbesondere eines Fensterrahmens bekannt. Diese Vorrichtung soll sich dadurch auszeichnen, dass an einer Mehrkopfschweißmaschine in einer Aufspannebene relativ zueinander verfahrbar geführte Schweißköpfe sowie jeweils zueinander relativ verschiebbare Aufspanneinheiten für die Profilstücke vorgesehen sind. Wie die Vorrichtung vor oder während des Schweißens derart steuerbar ist, das wahlweise mindestens zwei zu verbindende Kunststoffprofile aufeinander zubewegt werden oder ein Kunststoffprofil still steht und das andere Kunststoffprofil an dieses heranbewegt wird, wird hier nicht offenbart.

Des Weiteren ist aus der Druckschrift EP 1 136 234 A1 ein Verfahren und eine Vorrichtung zum Verschweißen von Kunststoffprofilstäben bekannt. Nach dieser Druckschrift ist hier lediglich ein Verfahren möglich, bei dem mindestens zwei zu verbindende Kunststoffprofile aufeinander zubewegt werden.

Des Weiteren ist aus der Druckschrift EP 0 819 514 A1 eine Vorrichtung zum Verbinden von Profilen aus Kunststoff bekannt. Auch hier ist lediglich eine Lösung analog der vorher beschriebenen Druckschrift EP 1 136 234 A1 offenbart.

Des Weiteren ist aus der Druckschrift DB 1 926 956 eine Schweißmaschine für Kunststoffrahmen bekannt. Dort werden unterschiedliche Verfahren auf unterschiedlichen Vorrichtungen realisiert.

Beim Schweißen der Kunststoffprofilstäbe ergibt sich folgender Funktionsablauf:
Die Profilstäbe müssen mit Hilfe von Anschlagflächen an den Längsseiten und Justierungen an den Gehrungsflächen in der richtigen Position auf den Tischen bzw. Schlitten aufgespannt werden. Die Schlitten fahren dabei gegen feste oder einstellbare Anschläge. Beim Anschmelzen und Anwärmen der Schweißflächen am Heizelement kommen weitere Anschläge zum Einsatz. Erst beim Fügen der Verbindung fahren dann die Schlitten auf ihre Endposition. Dabei wird unterschieden zwischen Anschlägen für die Positionen Einlegen und Schweißen und Anschlägen für die Positionen Fügen. Bei den verschiedenen Schubverfahren ergeben sich auch unterschiedliche Schlittenpositionen. Die Anschläge werden zum Beispiel durch Pneumatikzylinder von ihrer Grundposition in die Arbeitsposition gebracht. Das Problem einer Maschine mit beiden Schubverfahren liegt dabei in der Menge der hierfür benötigten Anschläge. Ferner müßten die Schlitten in verschiedenen Grundpositionen stehen und die Justierteile und die Heizelemente in zweierlei Arbeitspositionen gebracht werden. Für diese Ausgestaltung ist ein erheblicher Platzbedarf in der Maschine notwendig, der meistens nicht vorhanden ist und der zusätzlich erhebliche Mehrkosten verursacht.

Ausgehend von dem zuvor geschilderten Stand der Technik ist es Aufgabe der Erfindung, eine Lösung zum Schweißen von Kunststoffprofilen zur Verfügung zu stellen, die sowohl den Funktionsablauf des Schubverfahrens "Diagonalschub" als auch den Funktionsverlauf des Schubverfahrens "Parallelschub" ausführen kann, wobei der Aufwand für die benötigten Anschläge, Justierteile und Heizelemente sowie der Aufwand für die notwendige Positionierung dieser Bauteile so gering wie möglich zu halten ist.

Die Erfindung geht von dem beschriebenen Stand der Technik aus und schlägt zur Lösung der Aufgabe die in den unabhängigen Patentansprüchen 1 und 9 beschriebenen Merkmale vor. Vorteilhafte Weiterbildungen sind Gegenstand der Unteransprüche.

Es wird eine Vorrichtung zum Schweißen von auf Gehrung geschnittenen Kunststoffprofilen zur Verfügung gestellt, die die Kunststoffprofile an einer an den Gehrungsschnitten befindlichen Schweißfläche miteinander verschweißt und wobei die zu verbindenden Kunststoffprofile dabei auf beweglichen Schlitten gelagert und gehalten sind. Die Position der Schlitten ist gegebenenfalls festlegbar.

Die so beschriebene Vorrichtung zeichnet sich dadurch aus, daß die Bewegung der Kunststoffprofile (beziehungsweise der Schlitten) durch die Vorrichtung vor oder während des Schweißens derart steuerbar ist, daß wahlweise mindestens zwei zu verbindende Kunststoffprofile aufeinanderzu bewegt werden oder ein Kunststoffprofil stillsteht und das andere Kunststoffprofil an dieses heranbewegt wird. Durch diese Vorrichtung wird erreicht, daß eine Vorrichtung erhalten wird, die einen erheblichen anlagentechnischen Aufwand derart vermeidet, daß beispielsweise zusätzliche Anschläge, Pneumatikzylinder, Schlittenbahnen und dergleichen für die unterschiedlichen Bewegungsarten zur Verfügung gestellt werden müssen. Es wird gleichzeitig gewährleistet, daß beide Schubverfahren, die bisher auf nur unterschiedlichen Maschinen durchführbar waren, nunmehr auf einer Schweißvorrichtung wahlweise realisierbar sind. Der für die bessere Eckfestigkeit relevante Funktionsbeziehungsweise Arbeitsschritt des Fügens der Schweißverbindung wird hierbei nur in dem mit der besseren Eckfestigkeit relevanten Funktionsschritt im Parallelschub-Verfahren durchgeführt. Der Parallelschub wird dadurch erreicht, indem die oder der Schlitten in der Y-Richtung der Vorrichtung nur eine geringe Bewegung ausführen. Diese Bewegung erfolgt durch einen geringen Öffnungshub zu Beginn des Fügevorganges, welcher erforderlich ist, um die unterschiedliche Höhe der Ecken der Profilstäbe auszugleichen. Mit dem Schließhub erfolgt eine gleichzeitige Bewegung des zweiten Schlittens in der X-Richtung der Vorrichtung, so daß im Ergebnis ein Fügen der Gehrungsbeziehungsweise Schweißflächen ohne eine Relativbewegung erhalten wird. Eine Fügebewegung im sogenannten Diagonalschub-Verfahren ist mit der Vorrichtung auch möglich, beispielsweise dadurch, daß der Schlitten für die Bewegung in der Y-Richtung der Vorrichtung während des gesamten Schweißablaufes in der Endstellung stehen bleibt und dann die Schlitten für die X-Bewegung sich auf diese in Endstellung befindlichen Schlitten mit den darauf befindlichen Kunststoffprofilen zubewegen. Es wird jedoch davon ausgegangen, daß hierbei die Fügebewegung im Schweißprozeß in der Hauptsache ohne eine Relativbewegung der Gehrungs- beziehungsweise Schweißflächen erfolgen wird, und lediglich die Arbeitsschritte Positionieren und Aufheizen im sogenannten Diagonalschub-Verfahren erfolgen werden.

Die Erfindung sieht dabei unter anderen vor, daß die Bewegung der Schlitten durch die Vorrichtung vor oder während des Schweißens steuerbar ist. Zum einen ist es günstig, wenn vor dem eigentlichen Schweißen, also dem Verbinden der beiden Profile, die Relativbewegung zwischen den beiden zu verschweißenden Profilen festgelegt ist. Bevor die beiden Profile also miteinander in Verbindung kommen, ist bereits der gewünschte Fügeprozeß festgelegt und dieser wird dann auch ausgeführt. Es ist aber in gleicher Weise auch möglich, daß während des Schweißens diese Bewegung festgelegt wird. Dabei kann diese Auswahl zu Beginn des Schweißens erfolgen oder gegebenenfalls auch während des Schweißprozesses selber. Dabei ist der Begriff "Schweißen" nicht zwingend auf den Zeitpunkt zu beschränken, ab welchem die beiden Profile mit ihren erwärmten Gehrungsflächen miteinander in Kontakt kommen, es kann erfindungsgemäß auch der Zeitpunkt zuvor, also der komplette Prozeß des Verbindes der Profile zum Schweißvorgang gezählt werden (einschließlich Erwärmen der Gehrungsflächen und so weiter).

Die Erfindung erreicht durch eine beliebige Steuerung des Fügeprozesses eine entsprechende Optimierung des Prozesses aufgrund unterschiedlicher Bedingungen. Dabei benötigt die Erfindung keine zusätzlichen Mittel, sondern die Erfindung kann an einer Vorrichtung realisiert werden. Es wird eine hohe Flexibilität durch die erfindungsgemäße Vorrichtung erreicht.

Die Erfindung ist in Anspruch 1 beschrieben.

Die erfindungsgemäße Vorrichtung ist auch dadurch gekennzeichnet, daß die Bewegungsrichtung des/der Kunststoffprofile bezogen auf die Schweißfläche durch die Vorrichtung wahlweise in einem Winkel von 45° oder 90° steuerbar ist. Durch diese Ausbildung der erfindungsgemäßen Lösung ist gewährleistet, daß eine Relativbewegung an den Schweißflächen der Kunststoffprofile nicht stattfindet. So ist es beispielsweise möglich, daß ein Schlitten zunächst eine Bewegung bezogen auf die Schweißfläche in einem Winkel von 45° beispielsweise zum Positionieren des Kunststoffprofiles an dem Heizelement durchführt, um nach Durchführung des Anschmelzvorganges dann eine Bewegung mit einem Winkel von 90° bezogen auf die Schweißfläche durchzuführen. Somit ist gewährleistet, daß die unerwünschte Relativbewegung der beiden Gehrungs- beziehungsweise Schweißflächen während des Fügeprozesses vermieden wird.

Erfindungsgemäß wurde auch gefunden, daß es von Vorteil ist, wenn mindestens ein Kunststoffprofil durch die Vorrichtung derart bewegbar ist, daß ein kurzer Öffnungs- und Schließhub bezogen auf die Y-Richtung der Vorrichtung gleichzeitig mit der Bewegung des zweiten Kunststoffprofils in der X-Richtung zur Durchführung der notwendigen Fügebewegung gesteuert ausführbar ist, derart, daß die Gehrungsflächen in einer gedachten Linie auf dieser Schweißverbindung ohne Versatz aufeinanderzu bewegbar sind. Die gedachte Linie kann dabei als Linie D/E bezeichnet werden. Diese Linie steht dabei bevorzugt rechtwinklig auf den Gehrungsflächen.

Ein weiterer Aspekt der erfindungsgemäßen Lösung ist dadurch angegeben, daß das zweite Kunststoffprofil auf eine Führungsbahn sowohl in der X-Richtung als auch in der Y-Richtung der Vorrichtung bewegbar ist. Das heißt, mittels eines Schlittens der auf einer Führungsbahn gesteuert ist, kann das Kunststoffprofil eine Bewegung sowohl in Richtung X als auch in Richtung Y aber auch in beide Richtungen gleichzeitig vornehmen. Die Richtungen X und Y sind dabei definiert von der Ebene der Vorrichtung, in der der Fügeprozeß der Kunststoffprofile stattfindet. Die X- und Y-Richtung stehen günstigerweise aufeinander senkrecht.

Eine Weiterbildung der Vorrichtung zeichnet sich dadurch aus, daß die Führungsbahn eine Kreuzschlittenführung ist. Dies ist eine stabile Lösung, um eine Bewegung sowohl in X- als auch in Y-Richtung vorzusehen. Es ist aber auch möglich eine Führungsbahn vorzusehen, die zum Beispiel drehbar gelagert ist, um sowohl eine Bewegung in X- als auch eine Bewegung in Y-Richtung zu erlauben.

Eine Weiterbildung der erfindungsgemäßen Lösung zeichnet sich dadurch aus, daß der erste Schlitten für die Y-Richtung beim Fügevorgang durch Parallelanschläge geführt und gesteuert mit dem zweiten Schlitten für die X- und Y-Richtung bewegt wird. Durch diese Ausbildung der erfindungsgemäßen Lösung ist sichergestellt, daß eine gleichlaufende beziehungsweise synchrone Bewegung der mindestens zwei zu verschweißenden Kunststoffprofilstäbe aufeinanderzu erfolgt. Die unerwünschte Relativbewegung wird durch diese Steuerung vermieden.

Eine Weiterbildung der Erfindung sieht vor, daß die Schlitten pneumatisch und/oder hydraulisch gesteuert sind.

Eine Weiterbildung der erfindungsgemäßen Vorrichtung zeichnet sich dadurch aus, daß eine Schalt- beziehungsweise Steuereinrichtung die Bewegungsrichtung der Kunststoffprofile je nach Auswahl einsetzt und/oder steuert. Wie bereits erwähnt ist hierbei eine Vielzahl von Steuermöglichkeiten gegeben. Beispielsweise kann eine elektronische Steuerung für die notwendigen Bewegungsabläufe sorgen. Dies kann aber auch mittels dafür bekannter mechanischer, pneumatisch oder hydraulischer Steuerungen erfolgen.

Die Aufgabe der Erfindung wird auch gelöst durch ein Verfahren zur Herstellung von Rahmen aus auf Gehrung geschnittenen Kunststoffprofilen durch Justieren von mindestens zwei Kunststoffprofilen und Aufheizen der aus den Gehrungsflächen gebildeten Schweißfläche durch Heizspiegel beziehungsweise Heizelement bei gleichzeitiger Bewegung der Kunststoffprofile in Richtung Heizelement mit einer Bewegungsrichtung von 45° bezogen auf die Schweißfläche und anschließendem Herausschwenken des Heizelementes, welches sich durch die folgenden Verfahrensschritte auszeichnet:
- Ausführung eines kurzen Öffnungshubes A beim Beginn des Fügens mit einer Bewegungsrichtung von 45° von der Schweißfläche weg zum Ausgleich der Maßdifferenz zwischen den Gehrungsflächen der Schweißverbindung untereinander;
- hernach gleichzeitiger kurzer Schließhub B und gesteuertes aufeinanderzu bewegen der Kunststoffprofile mit einer Bewegungsrichtung von 45° bezogen auf die Schweißfläche, derart, daß keine Bewegung parallel zu den Gehrungsflächen der Schweißverbindung erfolgt.

Die Steuerung der Bewegung der Kunststoffprofile aufeinanderzu erfolgt dabei vorteilhafterweise mittels entsprechender mechanischer und/oder elektrischer und/oder pneumatischer Steuerungen. Mittels des so beschriebenen erfindungsgemäßen Verfahren wird ebenfalls erreicht, daß eine Relativbewegung an den zu fügenden Schweißflächen während des Schweißvorganges nicht stattfindet.

Eine weitere Entwicklung der erfindungsgemäßen Vorrichtung zeichnet sich dadurch aus, daß die Bewegung des zweiten Kunststoffprofiles von der Bewegung des ersten Kunststoffprofiles beziehungsweise des Schlittens, welcher das erste Kunststoffprofil trägt, abgeleitet ist. Hierdurch ist es möglich, nur einen Antrieb für die Bewegung beider Schlitten beziehungsweise Profile einzusetzen. Darüberhinaus benötigt die Bewegung der beiden Schlitten keine weitere Überwachung, da die abgeleitete Bewegung zu einer Zwangsführung der beiden Schlitten zueinander führt.

Die Aufgabe der Erfindung wird auch gelöst durch ein Verfahren, welches sich dadurch auszeichnet, daß eine Vorrichtung, wie sie zuvor erfindungsgemäß beschrieben wurde, zur Herstellung von Rahmen aus auf Gehrung geschnittenen Kunststoffprofilen im Verfahren eingesetzt wird.

Die Erfindung wird nachfolgend anhand von Ausführungsbeispielen und Zeichnungen näher erläutert. Es zeigen:
- Fig. 1: schematische Darstellung des erfindungsgemäßen Verfahren beziehungsweise Vorrichtung;
- Fig. 3: Kunststoffprofilrahmen aus vier Profilstäben;
- Fig. 4: Kunststoffprofilrahmen aus vier Profilstäben mit einem Pfosten oder Riegel;
- Fig. 5 bis 7: Darstellung der Herstellung einer Eckverbindung an Profilrahmen;
- Fig. 8 bis 10: schematischer Ablauf der Herstellung von Profilrahmen mit Pfosten;
- Fig. 11 bis 13: schematische Darstellung unterschiedlicher Schubverfahren bei der Herstellung von Kunststoffprofilrahmen;

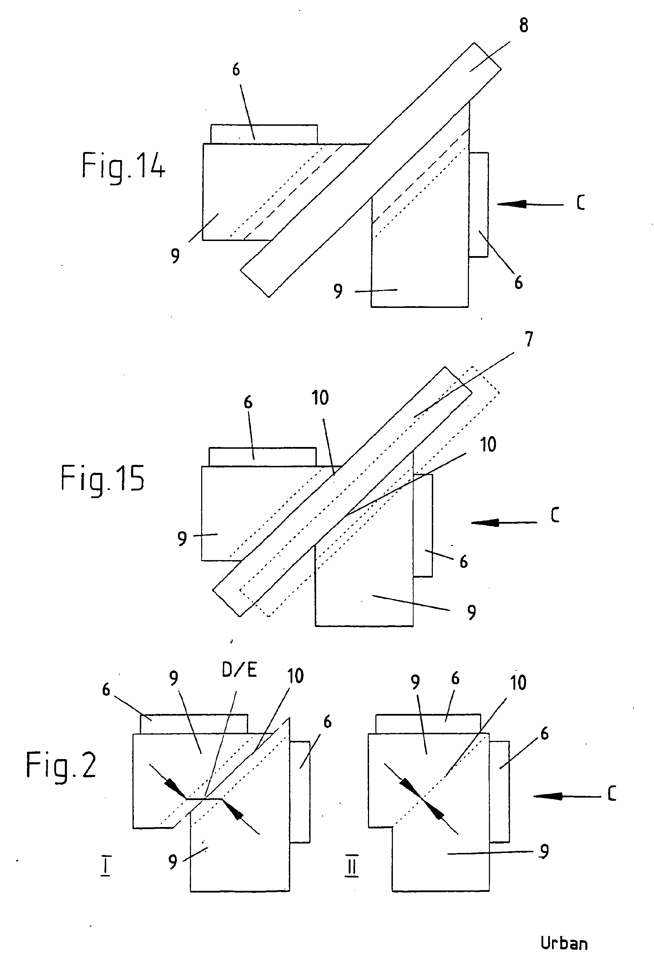

- Fig. 2, 14, 15: schematischer Ablauf der Herstellung einer Eckverbindung und

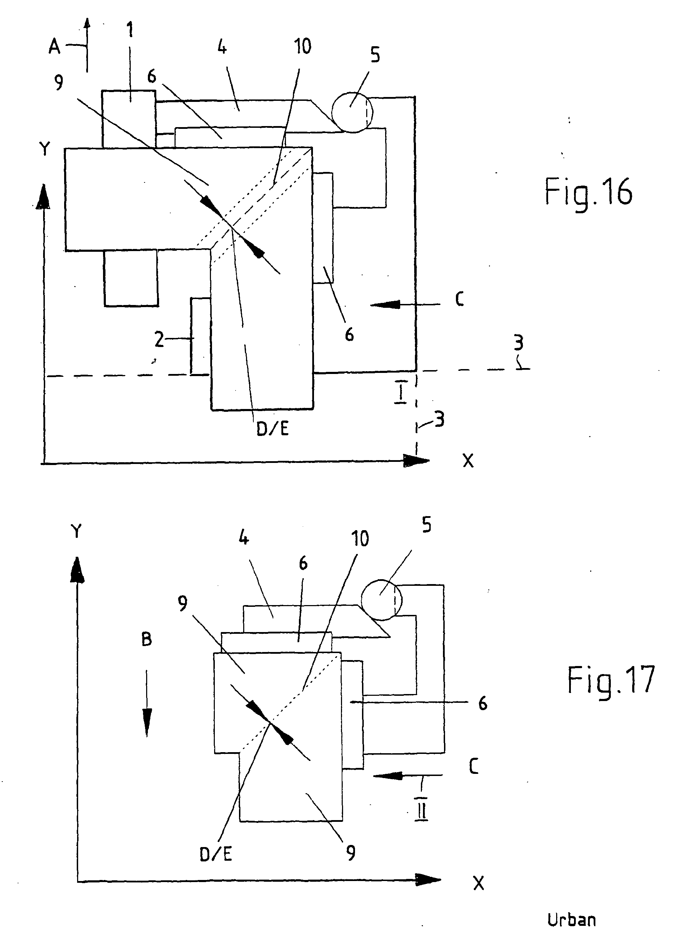

- Fig. 16, 17: Darstellung des Funktionsablaufes gemäß der Erfindung.

Das Schweißen von Kunststofffenstern oder Türen wird in der Regel von Kunststoffschweißmaschinen durchgeführt, die im Wesentlichen derzeit in zwei unterschiedlichen Bauarten ausgeführt werden. Es ist dabei bekannt, eine Eckverbindun zwischen zwei auf Gehrung geschnittene Kunststoffprofile an den Gehrungsschnitten miteinander zu verbinden, wobei die zu verbindenden Kunststoffprofile auf Schlitten beweglich gelagert und gehalten sind und die Position der Schlitten gegebenenfalls festlegbar ist. Die Kunststoffprofile werden nach dem Stand der Technik mit zwei unterschiedlichen Bewegungsrichtungen der beiden Kunststoffprofile zueinander durchgeführt.

Zum einen sind Vorrichtungen bekannt, die eine Bewegungsrichtung bezogen auf die durch die Gehrungsschnitte zur Verfügung gestellte Schweißfläche in einem Winkel von 45° im Fügeprozeß durchführen. Dies ist als sogenanntes Diagonalschub-Verfahren bekannt. Der Nachteil dieses Verfahrens ist, daß beim Fügen der angeschmolzenen Kunststoffprofile eine Relativbewegung an der Schweißfläche zwischen den beiden Profilen stattfindet. Dadurch wird eine ausreichende Eckfestigkeit der Schweißverbindung nicht immer gewährleistet.

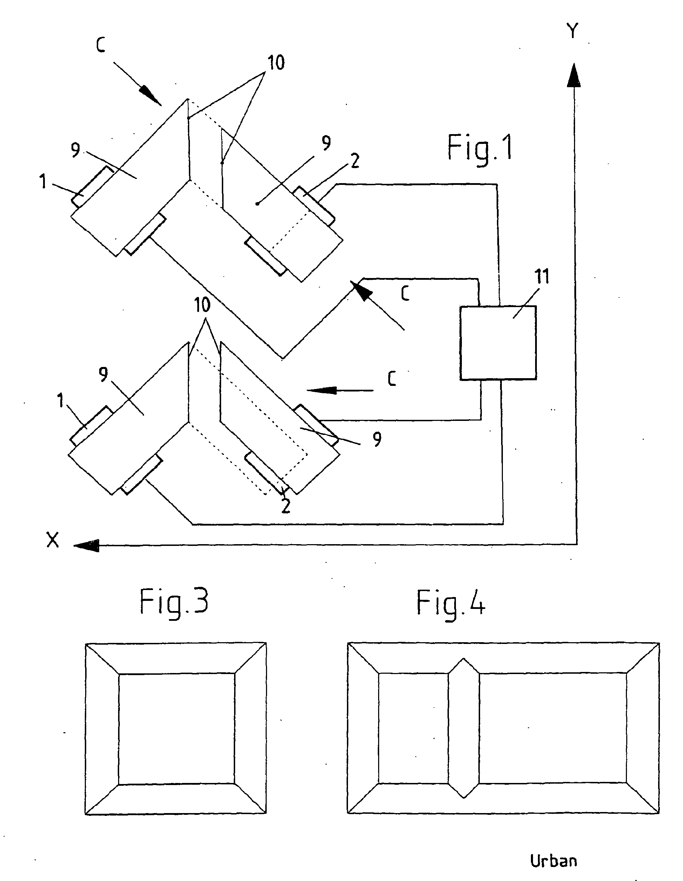

In der Fig. 1 ist schematisch ein derartiges Verfahren dargestellt. Mit dem Bezugszeichen 9 sind dabei die Kunststoffprofile bezeichnet, die hier bereits auf Gehrung geschnitten sind. Das Bezugszeichen 10 bezeichnet die Schweißfläche, die durch beide Gehrungsschnittflächen zur Verfügung gestellt ist. Die Pfeile, die mit C gekennzeichnet wurden, bezeichnen die Bewegungsrichtung der Profile, die sowohl von oben nach unten erfolgen kann als auch von unten nach oben. Es ist aber durchaus denkbar, daß lediglich ein Profil die Bewegung auf das andere Profil hin durchführt. Zusätzlich ist noch ein Richtungssystem mit X, Y für Fig. 1 vorgegeben, welches zur besseren Darstellung die Bewegungsrichtung der Kunststoffprofile innerhalb der Schweißvorrichtung während des Positionier-, Heiz- und Fügeprozesses kennzeichnet.

Wie aus den Pfeilen C ersichtlich bewegen sich die Schweißflächen 10 der Kunststoffprofile 9 aufeinanderzu und zwar derart, daß die Bewegungsrichtung einen Winkel von 45° bezogen auf die Schweißfläche besitzt. Dieses Schubverfahren wird, wie bereits erwähnt, auch als Diagonalschub-Verfahren bezeichnet.

Im unteren Teil von Fig. 1 ist dann das unter Fachleuten als Parallelschub-Verfahren bekannte Verfahren zum Zusammenfügen von vorgeheizten Kunststoffprofilecken bezeichnet. Der Pfeil C bezeichnet wiederum die Bewegungsrichtung. Es ist erkennbar, daß bei dieser Art der Zusammenführung der beiden Kunststoffprofile 9 keine Parallelverschiebung beziehungsweise Relativverschiebung an den Schweißflächen während des Fügeprozeßes eintritt. Diese Schweißverbindung zeichnet sich insgesamt dadurch aus, daß wesentlich bessere Eckfestigkeitswerte der Schweißverbindungen erzielt werden können. Die Unterschiede beider Schubverfahren führen also zu unterschiedlichen Festigkeiten der Schweißverbindungen. Deutlich erkennbar in der Fig. 2 ist, daß die Bewegungsrichtung bezogen auf die zu verbindenden Schweißflächen hier in einem Winkel von 90° bezogen auf diese Schweißfläche erfolgt.

Eine Steuerung 11 ist vorgesehen, welche mit den Antrieben der Schlitten 1, 2 verbunden ist. Abhängig von der Auswahl, welches Verfahren benutzt werden soll, aktiviert die Steuerung die entsprechenden Antriebe oder fixiert die Position der Schlitten 1, 2.

Fig. 3 zeigt einen aus vier Profilstäben hergestellten Rahmen, der sowohl im Diagonalschub- als auch im Parallelschub-Verfahren hergestellt werden kann. Diese Fig. ist lediglich zum besseren Verständnis der gesamten Verfahrensabläufe vorgesehen.

Fig. 4 zeigt einen aus vier Profilstäben erhaltenen Profilrahmen, der zusätzlich noch einen Pfosten oder Riegel aufweist. Auch diese Fig. ist lediglich zum besseren Verständnis der Verfahrensabläufe vorgesehen.

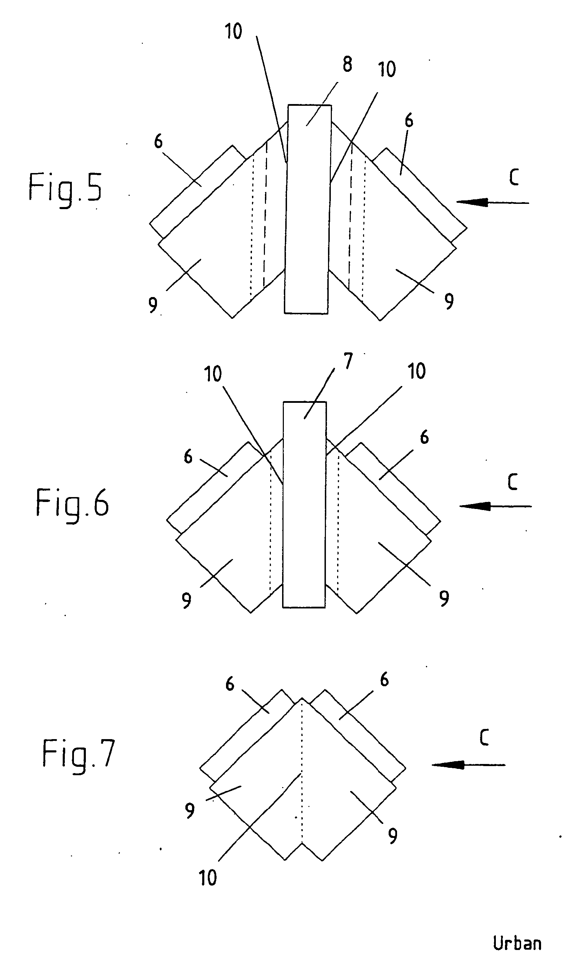

In den Fig. 5, 6 und 7 ist die Herstellung eines Profilrahmens im sogenannten Parallelschub-Verfahren, das heißt, mit einer Bewegungsrichtung der Profile bezogen auf die Schweißfläche von 90° dargestellt. Eine derartige Eckverbindung am Profilrahmen kann beispielsweise einzeln mittels sogenannter Einkopf-Schweißmaschinen hergestellt werden. Mit dem Bezugszeichen 9 sind die Kunststoffprofile,die auf Gehrung geschnitten sind, dargestellt. Diese Kunststoffprofile befinden sich auf in den Fig. 5, 6 und 7 nicht dargestellten Schlitten. Die Kunststoffprofile werden auf dem Schlitten gegen einen Anschlag 6 geführt. In der Fig. 5 erfolgt in einem ersten Schritt zunächst die Positionierung der Profile 9 gegen die Anschläge 6 und eine Justierung 8. Der Pfeil mit der Bezeichnung C bezeichnet wiederum die Bewegungsrichtung des rechten Kunststoffprofils 9. Mit dem Bezugszeichen 10 sind die durch Gehrungsschnitte erhaltenen späteren Schweißflächen bezeichnet. In Fig. 6 ist dargestellt, daß, nachdem die Kunststoffprofile 9 positioniert wurden, das Heizelement 7 nach Herausschwenken der Justierung 8 erfolgt. Mit den gestrichelten Linien ist dargestellt und im Vergleich zwischen Fig. 5 und 6 ersichtlich, daß ein Teil des Kunststoffprofils 9 bereits durch das Heizelement in der Darstellung gemäß Fig. 6 abgeschmolzen wurde. Nachdem die beiden Kunststoffprofile 9 ausreichend plastifiziert sind, kann das Heizelement 7 aus dem Bereich der späteren Schweißverbindung herausgeschwenkt werden. Mit dem Pfeil C ist wiederum die Bewegungsrichtung gekennzeichnet. Wie bereits erwähnt ist in dem dargestellten Beispiel die Vorrichtung zum Verschweißen der Kunststoffprofile derart ausgeführt, daß sich nur ein Profil auf das andere zubewegt. Es sind aber auch Maschinen bekannt, bei denen beide Profile eine gleichzeitige Bewegung aufeinanderzu nach der Entnahme des Heizelementes durchführen.

In Fig. 7 ist dann der Endzustand dargestellt, nachdem das Heizelement entnommen wurde und die beiden Kunststoffprofilteile weiter aufeinanderzu geführt wurden, so daß in dem Endzustand durch die gestrichelte Linie dargestellt eine Schweißverbindung 10 erhalten wurde. Die Bezugszeichen 6 bezeichnen die Anschläge, die während des Fügeprozesses die Kunststoffprofile führen. Die gemäß der Darstellungen in den Fig. 5, 6 und 7 erhaltene Schweißverbindung ist dadurch gekennzeichnet, daß während ihrer Herstellung keine Relativbewegung in der Fügeebene stattgefunden hat.

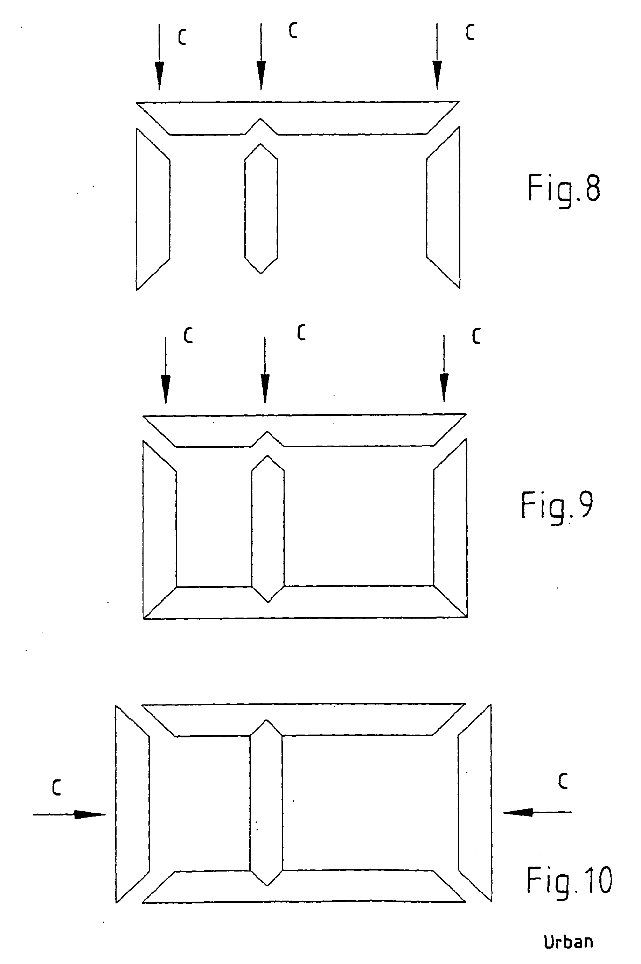

Die Fig. 8, 9 und 10 zeigen die Herstellung eines Teilrahmens aus insgesamt vier Profilrahmenstücken, die in der Darstellung gemäß Fig. 8 derart miteinander verschweißt werden, daß die Bewegungsrichtung des Profiles bezogen auf die spätere Schweißverbindung eine Relativverschiebung der Gehrungsflächen in der Fügeebene während des Fügeprozesses bewirkt. Fig. 8 zeigt dabei zunächst das Herstellen eines Profilrahmenteiles mit einer sogenannten Reihenmaschine. Diese Reihenmaschinen haben beispielsweise für die in der Fig. 8 vorzunehmende Verschweißung mindestens drei Heizelemente, wovon ein Heizelement für den Pfosten die dafür spezielle Ausbildung aufweisen muß. Es werden hierbei zunächst die zwei Seitenteile des Profilrahmens und der Pfosten mit der Längsseite des Profilrahmens verschweißt. In einem weiteren Arbeitsgang wird dann, wie in Fig. 9 ersichtlich, das letzte Profilrahmenteil ebenfalls mittels einer Reihenmaschine dann an den so entstandenen Teilrahmen angefügt. In Fig. 10 ist dargestellt, daß zunächst die Pfostenverbindung bei einer speziellen Maschine hergestellt wurde. Diese Pfostenverbindung kann auch dadurch erhalten werden, daß diese Pfosten beispielsweise mittels spezieller Befestigungsmittel eingeschraubt werden. In einem nächsten Arbeitsgang werden dann, wie mit den Pfeilen C angedeutet, die zwei letzten Profilrahmenteile mit dem vorgefertigten Teilrahmen aneinandergefügt. Auch bei dieser Fertigungsart wird in dem ungünstigeren Diagonalschub-Verfahren gearbeitet.

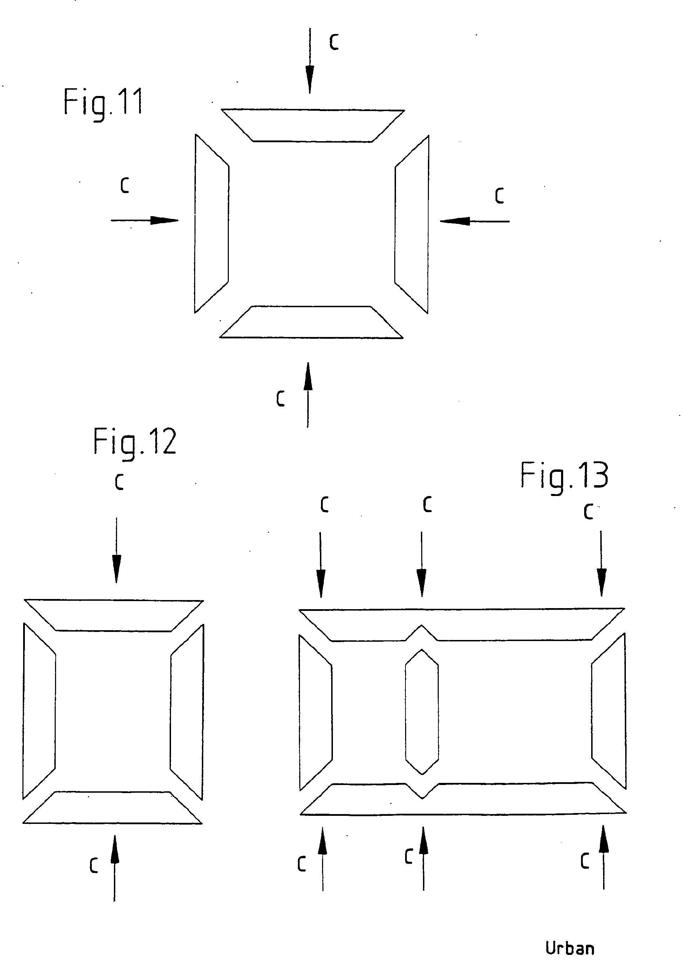

In der Fig. 11 ist dargestellt wie ein Rahmen aus vier Kunststoffprofilen erhalten wird, wie er beispielsweise auf einer sogenannten Vier-Kopf-Schweißmaschine hergestellt wird. An den Gehrungsflächen der Kunststoffprofile werden die Heizelemente 7 positioniert. Die Profile werden dann gegen die Heizelemente, wie aus den Pfeilen ersichtlich, gedrückt. Nach dem Plastifizieren aller vier Gehrungsflächen werden dann, nach Entnahme der Heizelemente die in der Fig. 11 nicht dargestellt sind, die Profilteile wie mit den Pfeilen ersichtlich gleichzeitig aufeinanderzu bewegt. Diese Art der Verschweißung von Kunststoffprofilen erfolgt demnach im Parallelschub-Verfahren, bei dem keine Relativbewegung an den Füge- beziehungsweise Schweißflächen aufgrund des Zusammenpressens der Profilteile erfolgt.

Fig. 12 zeigt eine weitere Möglichkeit der Herstellung eines Rahmens aus Kunststoffprofilen, wobei zwei Profilstücke beweglich und zwei Profilstücke fest positioniert sind. Nach dem Plastifizieren der Schweißflächen erfolgt dann die Bewegung der beiden beweglichen Profile auf die beiden fest positionierten Profile zu. Bei dieser Art des Verbindens der Schweißflächen erfolgt eine Relativbewegung an den zu verschweißenden Flächen. Wie bereits erwähnt gibt diese Ausführungsform Schweißverbindungen, die nicht so hohe Eckfestigkeits-Werte erreichen, wie die in Fig. 11 dargestellte Möglichkeit.

Fig. 13 zeigt eine weitere Möglichkeit des Verbindens von Kunststoffprofilen durch Schweißen, wobei hier die beiden mit C bezeichneten Profilteile bewegbar und die anderen drei Profilteile fest positioniert sind. Auch in der in Fig. 13 dargestellten Ausführungsform ist die eigentlich ungewünschte Relativbewegung während des Fügeprozesses an den Schweißflächen nicht zu vermeiden.

Der Funktionsablauf des Verschweißens der Profilstäbe wird nachfolgend nochmals anhand der Fig. 5 und 14, 6 und 15 sowie 7 und 2 beschrieben. Die Profilstäbe müssen zunächst üblicherweise in den richtigen Positionen auf den Tischen beziehungsweise Schlitten der Schweißvorrichtung aufgespannt werden. Die Schlitten fahren hierfür gegen feste oder einstellbare Anschläge, wie aus den Fig. 5 und 14 ersichtlich. In der Fig. 14 ist dargestellt, daß die Kunststoffprofile 9 gegen Anschläge 6 und eine Justierung 8 zunächst in die richtige Lage gebracht werden. Mit den gestrichelten Linien sind die späteren Phasen während des Schweißvorganges gekennzeichnet. Die stärker gestrichelte Linie bezeichnet die während des Aufheizvorganges abzuschmelzenden Stücke der Profile 9, die dünner gestrichelte Linie ist dann die spätere Schweißverbindung 10, die am Ende des Fügevorganges erhalten werden wird. Fig. 14 zeigt deutlich, daß das rechte Profil 9, welches auch mit dem Pfeil C bezeichnet ist, an den Ecken der Gehrungsverbindung in einem abweichenden Abstand dazu sich noch befindet. Das heißt, während des Fügeprozesses muß dieser Abstand dann überwunden werden, was zu der unerwünschten Relativbewegung während des Fügeprozesses führt.

Fig. 15 zeigt, daß nunmehr in dem Verfahrensablauf das Heizelement 7 zwischen den Profilstücken 9 angeordnet ist. Mit der gestrichelten Linie dargestellt ist, daß auch das Heizelement während des Aufwärmprozesses eine Bewegung durchführt. Dies ist begründet mit der bereits zuvor beschriebenen Abschmelzphase des Kunststoffprofils während des Aufheizens. Zum besseren Verständnis ist auch an den Profilen 9, hier an den Gehrungsschnitten die durch das Heizelement 7 aufgeheizt werden, die spätere Schweißverbindung 10 schematisch dargestellt. Der Pfeil mit der Bezeichnung C zeigt an, daß das Kunststoffprofil, welches in der rechten Seiten der Fig. 15 dargestellt ist, sich auf das Kunststoffprofil 9 auf der linken Seite zubewegt.

Fig. 2 zeigt die Position der beiden Kunststoffprofile 9, nachdem das Heizelement aus dem Gehrungsbereich der beiden Kunststoffprofile 9 herausgeschwenkt wurde. Mit Position ist der Beginn des Schweiß- beziehungsweise Fügevorganges bezeichnet. Deutlich sichtbar ist hierbei, daß immer noch ein Abstand zwischen den Ecken der beiden Profile 9 vorhanden ist, der erst jetzt durch die Beaufschlagung des rechten Profiles mit einer Bewegung in Richtung des zweiten Profiles auf der linken Seite dann ausgeglichen wird. Deutlich sichtbar ist, daß die Gehrungsflächen für die Schweißverbindung an der Linie D/E hier einen Versatz aufweisen müssen, um eine rechtwinklig ausgeführte Schweißverbindung der beiden Profile 9 ohne Versatz an der Eckverbindung außen und innen zu erhalten. Das heißt, genau um das Maß, um welches das rechte Kunststoffprofil 9 über das linke Kunststoffprofil an der Ecke hervorsteht, erfolgt eine Relativbewegung an der Schweißfläche 10. Wie bereits mehrfach beschrieben, ist diese Art der Schweißnahtausbildung ungünstig, aufgrund geringerer zu erreichender Eckfestigkeits-Werte. In der Position II der Fig. 2 ist dann der Endzustand der Schweißverbindung dargestellt.

In den Fig. 16 und 17 ist der Funktionsablauf für eine Ausführungsform der erfindungsgemäßen Lösung dargestellt. Fig. 16 geht dabei bereits von dem Positionieren und Anschmelzen am Heizelement aus, wie ja zuvor in den Fig. 14 und 15 beschrieben wurde. Im Gegensatz zu den Fig. 2 I, Beginn des Fügeprozesses, und II, Endzustand des Fügeprozesses, wird in der Fig. 16 deutlich, daß durch die erfindungsgemäße Ausführung der Vorrichtung eine Relativverschiebung quer zu der Linie D/E nicht stattfindet. Erfindungsgemäß wird dies dadurch erreicht, daß das Kunststoffprofil 9 auf dem Schlitten 2 ebenfalls eine Bewegung in Richtung C auf das Kunststoffprofil 9 auf dem Schlitten 1 durchführt. Bei Beginn des Fügeprozesses erfolgt jedoch im Gegensatz zum bisher bekannten Stand der Technik ein kurzer Öffnungshub A in Richtung Y des Schlittens 1 beziehungsweise auf der Y-Richtung zum Ausgleich des in Fig. 2 dargestellten Abstandes der beiden Ecken der angeschmolzenen Kunststoffprofile 9. In dem Moment, in welchem der kurze Öffnungshub A ausgeführt wurde, beginnt der Fügeprozess durch gleichzeitiges Bewegen des zweiten Schlittens 2 in Richtung C und synchron gesteuerten Ausführen des Schließhubes B. Dies ist aus der Fig. 17 ersichtlich. Mit II in der Fig. 17 ist bezeichnet, daß in der Stellung der Darstellung dann der Endzustand erreicht wurde. Die Führung des Schlittens 2 erfolgt dabei mittels eines Taster es 4, welcher an dem ersten Schlitten angeordnet ist und einer Tastrolle 5, welche korrespondierend dazu an der Führungsbahn 9 für den zweiten Schlitten 2 angeordnet ist.

Die Führungsbahn 3 ist dabei derart ausgeführt, daß sowohl eine Bewegung in Richtung der X-Richtung als auch in Richtung der Y-Richtung möglich ist. Das vordere Ende des Tasters 4 hat hierbei eine Schräge, welche die Tastrolle 5 berührt. Der Winkel dieser Schräge gibt einen Wert beziehungsweise ein Maß für die Bewegung des zweiten Schlittens 2 in X- und/oder Y-Richtung.

In der Fig. 17 ist ersichtlich, daß an der Linie D/E keine Parallelverschiebung beziehungsweise Relativbewegung der Schweißfläche 10 zueinander stattgefunden hat. Mittels der hier vorgestellten Ausführungsform ist es ermöglicht, daß die für das Fügen erforderliche Bewegung im Schubverfahren derart koordiniert erfolgt, daß keine Relativbewegung an den Schweißflächen 10 stattfindet. Durch die koordinierte Bewegung des kurzen Öffnungs- und Schließhubes des ersten Schlittens mit der Bewegung des zweiten Schlittens, wird die vorhandene Eckdifferenz (A/B) ohne eine Bewegung der Fläche selbst ausgeglichen. Der anlagentechnische Aufwand für eine erfindungsgemäße Schweißvorrichtung wird in erheblichen Maße verringert, da zu den bereits bekannten Schweißvorrichtungen lediglich zusätzlich ein Taster 4, eine Tastrolle 5 sowie eine Führungsbahn 3 benötigt werden. Es wird vermieden, daß zusätzliche Anschläge für die beiden Schubverfahren hier notwendig sind. Ferner ist auch die unterschiedliche Grundposition für die Schlitten 1 und 2 und die dazu wiederum erforderlichen Justierteile durch die erfindungsgemäße Ausführungsform nicht notwendig. Der anlagentechnische Aufwand einer entsprechenden Schweißvorrichtung wird dadurch in erheblichen Maße reduziert. Gleichzeitig werden Anlagenkosten eingespart. insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung zum Schweißen von auf Gehrung geschnittenen Kunststoffprofilen, die an einer an den Gehrungsschnitten befindlichen Schweißfläche miteinander verschweißt werden, wobei die zu verbindenden Kunststoffprofile von beweglichen Schlitten gehalten sind, wobei die Position der Schlitten gegebenenfalls festlegbar ist, wobei die Bewegung der Schlitten durch die Vorrichtung vor oder während des Schweißens derart steuerbar ist, daß mindestens zwei zu verbindende Kunststoffprofile (9) aufeinander zubewegt werden oder ein Kunststoffprofil stillsteht und das andere Kunststoffprofil an dieses heranbewegt wird, **dadurch gekennzeichnet, daß** ein Taster (4) an dem ersten Schlitten (1) und eine mit dem Taster (4) zusammenwirkende Tastrolle (5) an dem zweiten Schlitten (2) angeordnet sind.

2. Vorrichtung nach Anspruch 1, **dadurch gekennzeichnet, daß** die Bewegungsrichtung des/der Kunststoffprofile (9), bezogen auf die Schweißfläche (10), durch die Vorrichtung wahlweise in einem Winkel von 45° oder 90° steuerbar ist.

3. Vorrichtung nach einem der vorhergehenden Ansprüche, **dadurch gekennzeichnet, daß** mindestens ein Kunststoffprofil (9) durch die Vorrichtung derart bewegbar ist, daß ein kurzer Öffnungs- und Schließhub (A, B) bezogen auf eine erste Richtung (Y) der Vorrichtung gleichzeitig mit der Bewegung (C) des zweiten Kunststoffprofils in eine zweite Richtung (X) der Vorrichtung gesteuert ausführbar ist, derart daß die Gehrungsflächen für die Schweißverbindung (10) in einer Linie (D/E) ohne Versatz aufeinanderzubewegbar sind.

4. Vorrichtung nach einem der vorhergehenden Ansprüche, **dadurch gekennzeichnet, daß** der Schlitten (2) des zweiten Kunststoffprofils (9) auf einer Führungsbahn (3) sowohl in der zweiten Richtung (X) als auch in der ersten Richtung (Y) der Vorrichtung bewegbar ist.

5. Vorrichtung nach Anspruch 4, **dadurch gekennzeichnet, daß** die Führungsbahn (3) als Kreuzschlittenbahn ausgebildet ist.

6. Vorrichtung nach einem der vorhergehenden Ansprüche, **dadurch gekennzeichnet, daß** durch die Bewegung des ersten Schlittens (1) für die Y-Richtung beim Fügevorgang durch das Zusammenwirken von Taster (4) und Tastrolle (5) der zweite Schlitten (2) in der zweiten Richtung (X) und/oder in der ersten Richtung (Y) bewegt wird.

7. Vorrichtung nach einem der vorhergehenden Ansprüche, **dadurch gekennzeichnet, daß** die Schlitten (1, 2) pneumatisch und/oder hydraulisch gesteuert sind.

8. Vorrichtung nach einem der vorhergehenden Ansprüche, **dadurch gekennzeichnet, daß** eine Schalt- beziehungsweise Steuereinrichtung (11) die Bewegungsrichtung der Kunststoffprofile je nach Auswahl einsetzt und/oder steuert.

9. Verfahren zur Herstellung von Rahmen aus auf Gehrung geschnittenen Kunststoffprofilen durch Justieren von mindestens zwei Kunststoffprofilen und Aufheizen der aus den Gehrungsflächen gebildeten Schweißfläche durch Heizspiegel bei gleichzeitiger Bewegung der Kunststoffprofile in Richtung Heizspiegel mit einer Bewegungsrichtung von 45°, bezogen auf die Schweißfläche, und anschließendem Wegbewegen des Heizspiegels, **dadurch gekennzeichnet, dass** zum Ausgleich einer Maßdifferenz zwischen den Gehrungsflächen der Schweißverbindung untereinander, bei Beginn des Fügeprozesses ein kurzer Öffnungshub (A) der auf den Schlitten gehaltenen Kunststoffprofile (9) in einem Winkel von 45° entgegen der Schweißfläche (10) erfolgt und hernach ein kurzer Schließhub (B) und gesteuertes Aufeinanderzubewegen der auf dem Schlitten gehaltenen Kunststoffprofile (9) in einem Winkel von 45° hin zur Schweißfläche (10) ausgeführt wird, derart dass keine Bewegung parallel zu den Gehrungsflächen der Schweißverbindung erfolgt.

10. Verfahren nach Anspruch 9, **dadurch gekennzeichnet, dass** die Bewegung des zweiten Kunststoffprofils von der Bewegung des ersten Kunststoffprofils bzw. von dem das erste Kunststoffprofil tragenden Schlitten abgeleitet wird.

## Claims

1. Device for welding of mitered plastic profiles where the plastic profiles are welded together through their welding surfaces whereas the plastic profiles to be welded are hold on moveable slides whose positions can be immobilized and whose movements are controlled by the device before or during the welding process so that at least two plastic profiles (9) to be welded together can be moved towards one another or one can be moved towards the other one standing still, **characterized in that** a sensing probe (4) is located at the first slide (1) and a sensing roll (5) interacting with the sensing probe (4) is located at the second slide (2).

2. Device according to claim 1, **characterized in that** the direction of the movement of the plastic profile(s) (9) in regards ofthe welding surface (10) can be selected by the device to be between 45° and 90°.

3. Device according to one of the preceding claims, **characterized in that** at least one plastic profile (9) can be moved by the device so that a short opening and closing movement (A, B) is executed in regards of a first movement direction (Y) of the device simultaneously with a movement (C) of the second plastic profile in a second movement direction (X) ofthe device resulting in a movement of the mitred surfaces along a line (D/E) without any lateral displacement during the creation of the welding connection (10).

4. Device according to one of the preceding claims, **characterized in that** the slide (2) of the second plastic profile (9) can be displaced on a guideway (3) along the second direction (X) as well as along the first direction (Y) of the device.

5. Device according to claim 4, **characterized in that** the guideway (3) is configured as a cross slide guideway.

6. Device according to one of the preceding claims, **characterized in that** the movement of the first slide (1) in Y-direction during the welding process results in a movement of the second slide (2) in the second direction (X) and/or in the first direction (Y) via the interaction between the sensing probe (4) and the sensing roll (5).

7. Device according to one of the preceding claims, **characterized in that** the slides (1, 2) are controlled by pneumatic and/or hydraulic means.

8. Device according to one of the preceding claims, **characterized in that** the commutation or controlling system (11) activates and/or controls the orientation of the movements of the plastic profiles as required.

9. Manufacturing process of frames made of mitred plastic profiles through the adjustment of at least two plastic profiles and the heating through heating-mirrors of the welding surface built with the mitred surfaces of the plastic profiles whilst simultaneously moving the plastic profiles towards the heating-mirrors along a direction of 45° in regards of the welding surface followed by the withdrawal of the heating-mirrors, **characterized in that**, in order to allow an compensation of the tolerances between the mitred surfaces of the welding connection, a short opening movement (A) ofthe plastic profiles (9), maintained on the slides, is executed along a 45° direction away from the welding surface (10) followed by a short closing movement (B) with a controlled movement of the plastic profiles (9) maintained on the slide along a 45° direction towards the welding surface (10) so that no movement parallel to the mitred surfaces of the welding connection occurs.

10. Process according to claim 9, **characterized in that** the movement of the second plastic profile is derived from the movement of the first plastic profile, corresponding to the movement of the slide maintaining the first plastic profile.

## Revendications

1. Dispositif de soudage de profilés en plastique coupés en onglet destiné à les souder entre eux au niveau de leurs surfaces en onglet en immobilisant chacun des profilés à souder sur un coulisseau dont les positions peuvent être bloquées et modifiées par le dispositif avant ou pendant le soudage de façon à ce qu'il soit possible de déplacer au moins deux profilés en plastique (9) l'un vers l'autre ou d'immobiliser un de deux profilés pendant que l'autre est déplacé vers le profilé immobile, **caractérisé en ce qu'**un palpeur (4) est situé au niveau du premier coulisseau (1) et un rouleau palpeur (5) interagissant avec le palpeur (4) est situé au niveau du deuxième coulisseau (2).

2. Dispositif selon la revendication 1, **caractérisé en ce que** l'angle du mouvement du/des profilé(s) en plastique (9) par rapport à la surface de soudage (1) peut être piloté par le dispositif et varié entre 45° et 90°.

3. Dispositif selon une des revendications précédentes, **caractérisé en ce qu'**au moins un profilé en plastique (9) peut être piloté et déplacé par le dispositif de façon à pouvoir réaliser un court mouvement d'ouverture ou de fermeture (A, B) par rapport à une première direction (Y) du dispositif et ceci simultanément à un mouvement (C) du deuxième profilé en plastique et parallèlement à une deuxième direction (X) du dispositif et de façon à ainsi effectuer un mouvement selon une ligne (D/E) sans décalage des deux surfaces en onglet l'une vers l'autre et vers la ligne de soudage (10).

4. Dispositif selon une des revendications précédentes, **caractérisé en ce que** le coulisseau (2) du deuxième profilé en plastique (9) situé sur un rail de guidage (3) peut être déplacé selon une deuxième direction (X) mais également selon une première direction (Y) du dispositif.

5. Dispositif selon la revendication 4, **caractérisé en ce que** le rail de guidage (3) est configuré comme un rail de guidage pour charriots croisés.

6. Dispositif selon une des revendications précédentes, **caractérisé en ce que** le mouvement du premier coulisseau (1) selon la direction (Y) durant le processus de soudage provoque le déplacement du deuxième coulisseau (2) selon la deuxième direction (X) et/ou selon la première direction (Y) via l'interaction entre le palpeur (4) et le rouleaux palpeur (5).

7. Dispositif selon une des revendications précédentes, **caractérisé en ce que** les coulisseaux (1, 2) sont pilotés de façon pneumatique et/ou hydraulique.

8. Dispositif selon une des revendications précédentes, **caractérisé en ce qu'**une centrale de commutation ou un système de contrôle (11) active et/ou pilote les mouvements et les directions des profilés en plastique en fonction des besoins.

9. Procédé de fabrication de cadres à partir de profilés en plastique découpés en onglet par le positionnement d'au moins deux profilés en plastique et l'échauffement de la surface de soudage formée à partir des surfaces en onglet à l'aide de lames chauffantes accompagné par un mouvement simultané des profilés en plastique en direction des lames chauffantes avec un angle de 45° par rapport à la surface de soudage, suivi d'un mouvement de retrait des lames chauffantes, **caractérisé en ce qu'**un court mouvement d'ouverture (A) des profilés plastiques (9) immobilisés sur les coulisseaux est effectué sous un angle de 45° par rapport à la surface de soudage (10) suivi d'un court mouvement de fermeture (B) des profilés plastiques (9) immobilisés sur les coulisseaux sous un angle de 45° par rapport à la surface de soudage (10) de façon à éviter un quelconque mouvement de décalage selon une direction parallèle aux surfaces en onglet du soudage et permettant d'ajuster des éventuelles tolérances entre les surfaces d'onglet au niveau de la ligne de soudage.

10. Procédé selon la revendication 9, **caractérisé en ce que** le mouvement du deuxième profilé en plastique est dérivé du mouvement du premier profilé en plastique, c'est-à-dire du mouvement du coulisseau du premier profilé en plastique.
